# EUROPEAN PATENT APPLICATION

(11) **EP 4 502 810 A1**
(43) Date of publication of application: **05.02.2025**
(21) Application number: 24185022.1
(22) Date of filing: 27.06.2024
(51) Int. Cl.: G06F 11/07, G06F 11/30, G06F 11/20

(54) **NETWORK INTERFACE DEVICE FAILOVER**

(30) Priority: 04.08.2023 US 202318230387
(71) Applicant: INTEL Corporation, Santa Clara, CA 95054 (US)
(72) Inventor: GUIM BERNAT, Francesc, 08036 Barcelona (ES); WALSH, Eoin, Limerick, V94KD0P (IE); KUMAR, Karthik, Chandler, 85249 (US); CARRANZA, Marcos E., Portland, 97229 (US)
(74) Representative: 2SPL Patentanwälte PartG mbB

(57) **Abstract**

Examples described herein relate to failover of processes from a first network interface device to a second network interface device. A first programmable network interface device includes a network interface, a direct memory access (DMA) circuitry, a host interface, and at least one processor to execute a first process. A second programmable network interface device includes a network interface, a DMA circuitry, a host interface, and at least one processor. The at least one processor of the second programmable network interface device is to perform failover execution of the first process.

## Description

### BACKGROUND

The Edge computing cluster and data center clusters encompass client usages such as smart cities, augment reality (AR), virtual reality (VR), assisted or autonomous vehicles, proximity triggered services, and other applications with a wide variety of workload behaviors and requirements. Edge computing seeks to place compute and data storage resources physically closer to data sources and data receivers to reduce latency of processing and accessing data and reduce network bandwidth utilization. Edge cloud architectures utilize network interface devices such as Intel^{®} Infrastructure Processing Units (IPUs) to manage devices and allow central processing units (CPUs), graphics processing units (GPUs), and other processors (e.g., xPU) to execute applications. IPUs can process received data streams using accelerators and other processors.

### BRIEF DESCRIPTION OF THE DRAWINGS

FIG. 1 depicts an example system.
FIG. 2 depicts an example system.
FIGs. 3A-3C depict an example of operations to failover a process to a failover network interface device.
FIG. 4 depicts an example operation.
FIG. 5 depicts an example system.
FIG. 6 depicts an example process.
FIGs. 7A and 7B depict example network interface devices.
FIG. 8 depicts an example network interface device.
FIG. 9 depicts an example system.

### DETAILED DESCRIPTION

Network interface devices that include processors to execute processes (e.g., IPUs, or other devices) can perform offloaded tasks and alleviate loads on central processing units (CPUs). However, if a process-executing network interface device malfunctions, a disruption in process-execution can occur. Various examples described herein can attempt to reduce disruptions from a malfunction of a process-executing network interface device by providing a failover execution of a process to another process-executing network interface device, or other device.

Based on a configuration, an active process-executing network interface device can be associated with at least one other process-executing network interface device that can act as a failover process-executing network interface device. A failover process-executing network interface device can include circuitry that are in low power mode. The failover process-executing network interface device can copy state of a particular process executed by the active process-executing network interface device. The state can include state of the particular process generated during execution by one or more of: a processor (e.g., central processing unit (GPU), graphics processing unit (GPU), or xPU), accelerator (e.g., field programmable gate array (FPGA), application specific integrated circuitry (ASIC)), or other circuitry. The failover process-executing network interface device can monitor the active process-executing network interface device for operational status of a particular process or circuitry utilized in execution of the particular process. Based on operational status of the active process-executing network interface device indicating a potential malfunction of the active process-executing network interface device, the failover process-executing network interface device can execute the particular process and utilize process state copied from the active process-executing network interface device in a processor, accelerator, or other circuitry. In some examples, the failover process-executing network interface device can execute the particular process using a different device than utilized to execute the process on the active process-executing network interface device. The failover process-executing network interface device can adjust a connection with a host system to expose the failover process-executing network interface device as the active process-executing network interface device. For example, for a Peripheral Component Interconnect Express (PCIe) bar hierarchy, failover process-executing network interface device can replace the active process-executing network interface device as a PCIe device.

In a proactive mode, a process executed on an active process-executing network interface device can also execute on failover process-executing network interface device and the active process-executing network interface device can share state of the executing process with the failover process-executing network interface device to synchronize operations of the processes executing on different process-executing network interface devices. In a reactive mode, a process can execute on an active process-executing network interface device and based on failure of the active process-executing network interface device, the process can restart execution on the failover process-executing network interface device.

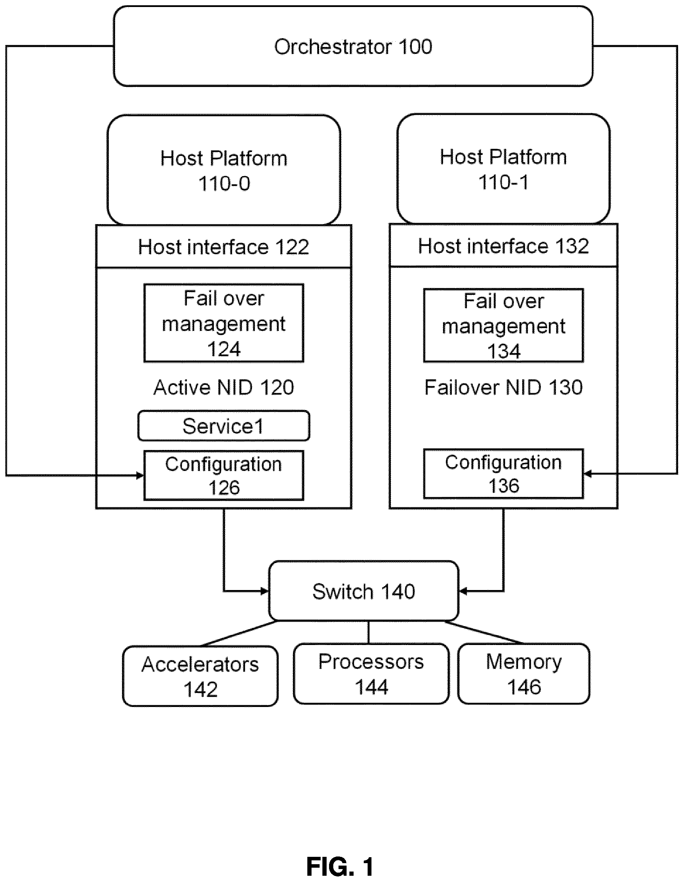

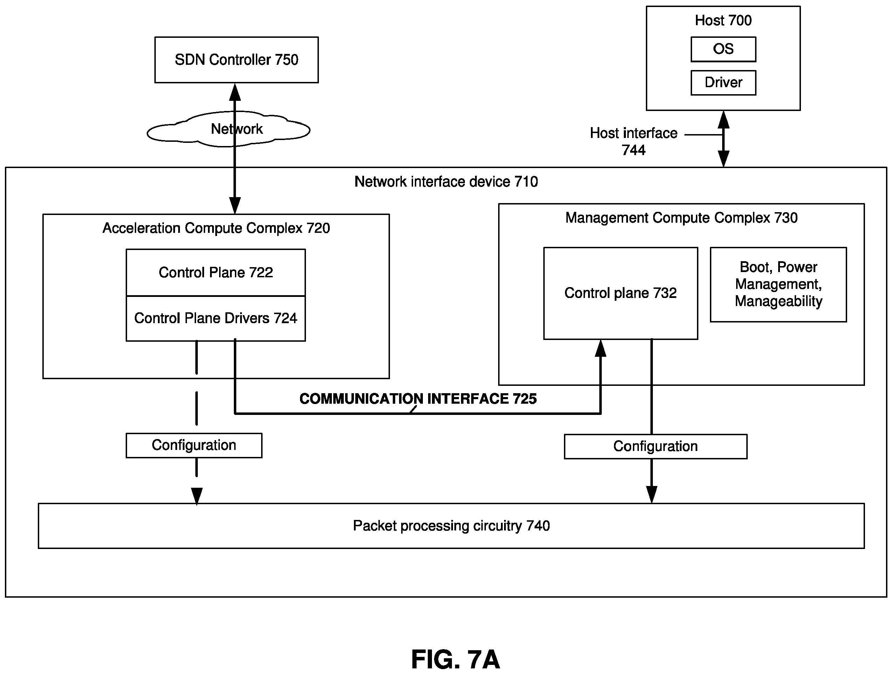

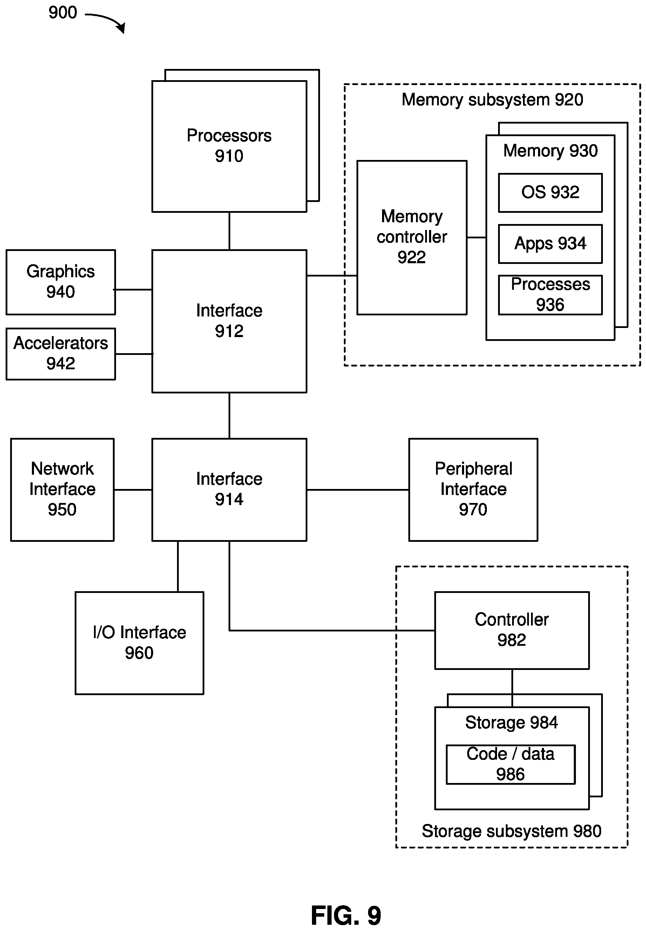

FIG. 1 depicts an example system. Two more network interface devices (NIDs) 120 and 130 can be connected to one or more host platforms 110-0 to 110-1 via respective host interfaces 122 and 132. Various examples of network interface devices 120 and 130 can include circuitry and software described at least with respect to FIGs. 7A, 7B, 8, and/or 9. Various examples of host platforms 110-0 to 110-1 can include circuitry and software described at least with respect to FIG. 9.

System software stack 100 (e.g., an orchestrator, hypervisor, or operating system (OS)) or administrator may determine an active NID 120 and one or more failover NIDs 130 to perform failover execution of a process (e.g., Service1). System software stack 100 can identify a failover domain with multiple NIDs and notify the NIDs in a failover domain of an active NID and failover NIDs. For example, configuration 126 and configuration 136 can indicate a failover domain identifier (ID) and active and failover NIDs. An example of configuration 126 and configuration 136 is as follows.

| Failover domain | Active NID | Failover NIDs | Identifiers of processes to failover |
|---|---|---|---|
| Identifier value | Media access control (MAC) address or other device identifier (e.g., physical or virtual function) | Media access control (MAC) address or other device identifier (e.g., physical or virtual function) | Process address space identifier (PASID) values or other identifier |

For example, a process (e.g., Service1) can perform packet processing based on one or more of Data Plane Development Kit (DPDK), Storage Performance Development Kit (SPDK), OpenDataPlane, Network Function Virtualization (NFV), software-defined networking (SDN), Evolved Packet Core (EPC), or 5G network slicing. Some example implementations of NFV are described in European Telecommunications Standards Institute (ETSI) specifications or Open Source NFV Management and Orchestration (MANO) from ETSI's Open Source Mano (OSM) group. A virtual network function (VNF) can include a service chain or sequence of virtualized tasks executed on generic configurable hardware such as firewalls, domain name system (DNS), caching or network address translation (NAT) and can run in VEEs. VNFs can be linked together as a service chain. In some examples, EPC is a 3GPP-specified core architecture at least for Long Term Evolution (LTE) access. 5G network slicing can provide for multiplexing of virtualized and independent logical networks on the same physical network infrastructure. Some processes can perform video processing or media transcoding (e.g., changing the encoding of audio, image or video files).

For example, failover management 134 of failover NID 130 can communicate with fail over management 124 of active NID 120 to copy state of Service1 for use in case Service1 is to be executed on failover NID 130. Examples of state can include contents of registers that the process may utilize (e.g., integer data, floating-point data), program counter content, operating system (OS) specific data, condition registers (e.g., status or flag register), or other execution state of the process. In some examples, state can be copied via switch 140. In some examples, state can include a packet header and/or data as well as metadata and descriptors utilized by NID 120.

Switch 140 can provide active NID 120 and failover NID 130 with access to circuitry such as accelerators 142, processors 144, and memory 146.

For example, failover management 134 of failover NID 130 can monitor activity of circuitry of active NID 120 (e.g., power consumption, temperature, frequency of operations of processors or accelerators, or others) and based on identifying power consumption below a level, temperature above a second level, or frequency of operations of processors or accelerators below a third level, or other telemetry values, failover management 134 can determine Service1 is to be failed over from active NID 120 to failover NID 130.

In some examples, in configuration 136, system software 100 can specify a second failover domain so that NID 130 can failover to a second failover NID. For example, after failover of execution of Service1 from an active NID 120 to execution on failover NID 130, failover NID 130 can be identified as a second active NID and a second failover NID can be used for failover operations based on configuration 136.

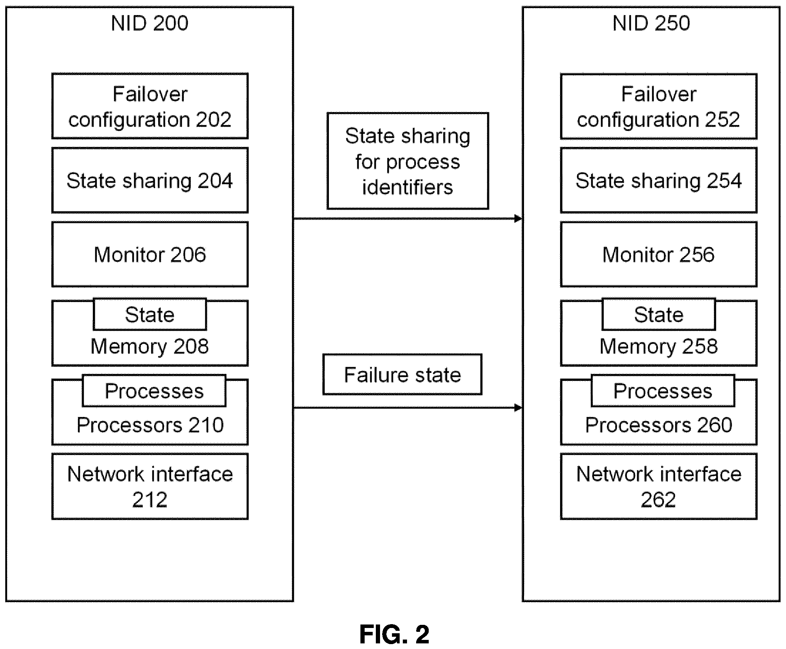

FIG. 2 depicts an example system. For example, based on a failover domain applicable to first NID 200 and second NID 250, first NID 200 can execute a process that fails over to second NID 250. System software stack may configure the first NID 200 to communicate process state information for failover to the second NID 250 by a switch (e.g., CXL) or other connection. NIDs 200 and 250 can include an interface that can be accessed out of band from data traffic that allows the system stack or backend to configure the first NID 200 with failover configuration 202 to failover to second NID 250 or to failover to a CPU or platform, or not perform failover. In some examples, at least one process executed by processors 210 is not failed over to execute on processors 210 of NID 250 whereas at least one process executed by processors 210 can be failed over to execute on processors 260 of NID 250.

NIDs 200 and 250 can include respective state sharing circuitries 204 and 254 that are to maintain coherent status of particular processes. State sharing circuitry 204 can monitor changes to state of particular processes executing in NID 200 and propagate the state changes to failover NID 250.

State sharing circuitry 204 can monitor activity of one or more circuitries in active NID 200 and different circuitry in NID 200 may notify state sharing circuitry 254 of NID 250 that an updated state is stored in a particular memory location or available to be copied. In some examples, state sharing circuitry 204 can provide a notification to state sharing circuitry 254 that identifies the block/element identifier (ID) and an address of a new payload and payload size. In some examples, state sharing circuitry 204 may copy the state and data corresponding block/element ID and address via a switch or other interface to memory 258 of failover NID 250. In some examples, state sharing circuitry 204 of active NID 200 can communicate updated state is available and state sharing circuitry 254 of failover NID 250 may copy the state and data corresponding block/element ID and address dynamically via a switch or other interface to memory 258.

In some examples, state can include state of the processes generated during execution in NID 200 by one or more of: a processor (e.g., central processing unit (GPU), graphics processing unit (GPU), or xPU), accelerator (e.g., field programmable gate array (FPGA), application specific integrated circuitry (ASIC)), or other circuitry.

In some examples, state can include virtual function (VF) or physical function (PF) configurations so that NID 250 can utilize the VF or PF to communicate data generated by the failed over process. Various examples of VF and PF are described with respect to Single Root I/O Virtualization (SR-IOV) and Sharing specification or Intel^{®} Scalable I/O Virtualization (SIOV)).

Monitoring circuitry 206 of active NID 200 can monitor circuitry of active NID 200 and indicate to failover NID 250 that a failure occurred. In some examples, monitor circuitry 256 of failover NID 250 can monitor active NID 200 and identify that a failure state of active NID has 200 occurred. Failures can be identified by monitoring certain model specific registers (MSR) or registers on NID 200 that indicate failure state of NID 200 or failure state of a processor (e.g., CPU) or other device (e.g., memory, cache, accelerator). Based on detected failure state of NID 200, monitoring circuitry 206 of active NID 200 can indicate to failover NID 250 to perform failover execution of particular processes. For example, particular processes can include processes that are identified to failover NID 250 and state for such processes can be shared with failover NID 250. In some examples, failover NID 250 can continue execution of processes identified to be failed over to failover NID 250 based on shared state. In some examples, failover NID 250 can restart execution of processes identified to be failed over to failover NID 250. In some examples, failover NID 250 can execute a failed over process using a different device(s) than utilized to execute the process on active NID 200.

In some examples, monitor circuitry 256 and memory 258 of failover NID 250 can be kept in operating power state and other circuitry of failover NID 250 can be kept in reduced power state. On failover, monitor circuitry 256 of failover NID 250 can manage the power and status of failover NID 250 by causing an increase in power state from sleep states (e.g., C state) to active state. On failover, monitor circuitry 256 of failover NID 250 can modify PCIe connection context to modify routing to expose failover NID 250 the PCIe hierarchy connection to host platforms so that failover NID 250 can copy data to one or more host platforms. On failover, monitor circuitry 256 of failover NID 250 can notify to system software stack (e.g., orchestrator, OS, or other software) that failover NID 250 is an active NID.

In some examples, failover NID 250 can execute the particular processes identified to be failed over in parallel with execution of the processes by active NID 200 but not output data generated via a transmitted packet or to a host platform and can store the results in memory 258 instead. The processes executed by active NID 200 and failover NID 250 can start at approximately a same time or the process executed by failover NID 250 can commence execution after the same process commences execution by active NID 200.

In some examples, instruction semantics of a processor or accelerator in NID 200 that execute an application can be different from instruction semantics (e.g., (Instruction Set Architecture (ISA))) of a processor or accelerator in NID 250 selected to execute the migrated application. In such cases, an executable binary or kernel, that can execute on a selected processor or accelerator of NID 250, can be retrieved from storage or memory on NID 250 or connected to NID 250 or transmitted to NID 250 and executed on NID 250. In such cases, NID 250 can translate a binary associated with the migrated application, from NID 200, to a format (e.g., ISA or kernel) that can execute on a selected processor or accelerator of NID 250. In some cases, a selected processor or accelerator of NID 250 can perform processor emulation to execute the migrated application by translating processor instructions and operating system calls as an application is running.

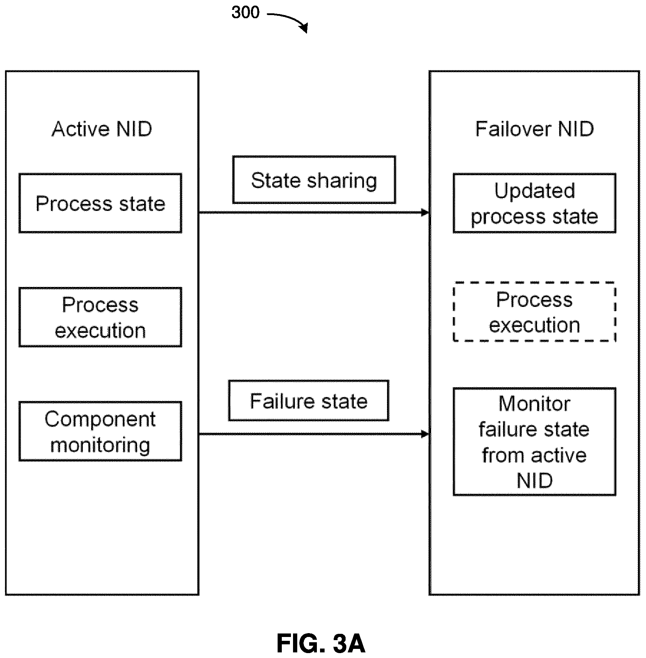

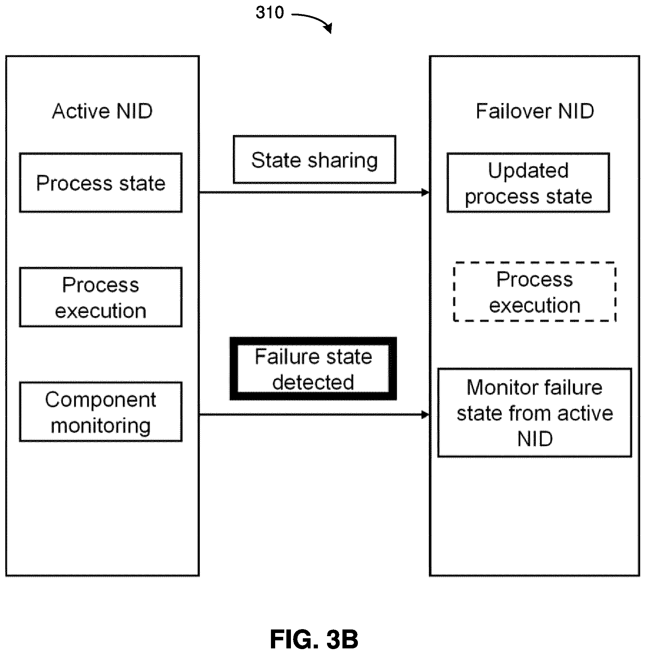

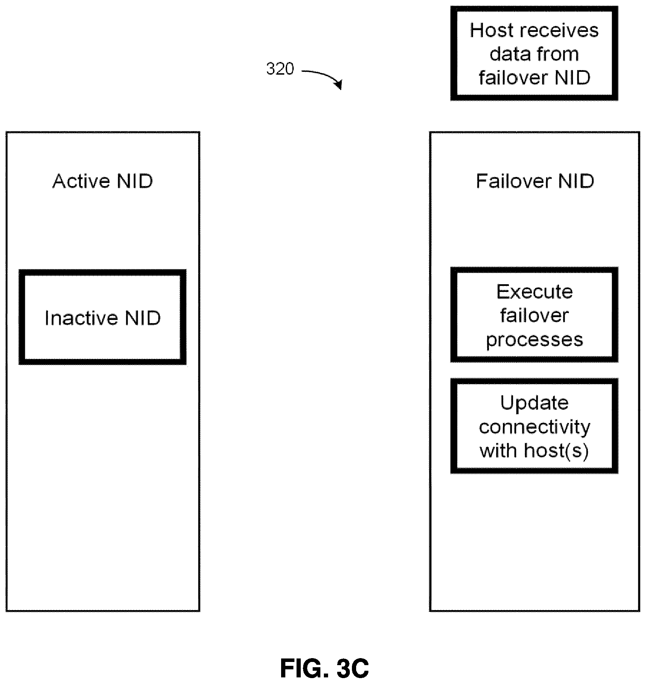

FIGs. 3A-3C depict an example of operations to failover a process to a failover network interface device. For example, as shown in FIG. 3A, state 300 can include an active NID sharing context state for one or more processes executed by the active NID with a failover NID. Failover NID can monitor failure state of active NID. A failure state can be indicated based on a register value, temperature level, power consumption level, frequency of processor execution, or other telemetry. Optionally, failover NID can execute at least one failover process in parallel with execution of the at least one process by active NID. For example, as shown in FIG. 3B, state 310 can include failover NID detecting a failure state of active NID. For example, as shown in FIG. 3C, state 320 can include failover NID executing a failover process based on state shared from the active NID. In state 320, failover NID can update connectivity information with a host platform interface to provide data to one or more host platforms. Connectivity information can relate to a PCIe device hierarchy, as described herein. In state 320, active NID can be changed to an inactive mode and can reduce power state and enter sleep mode.

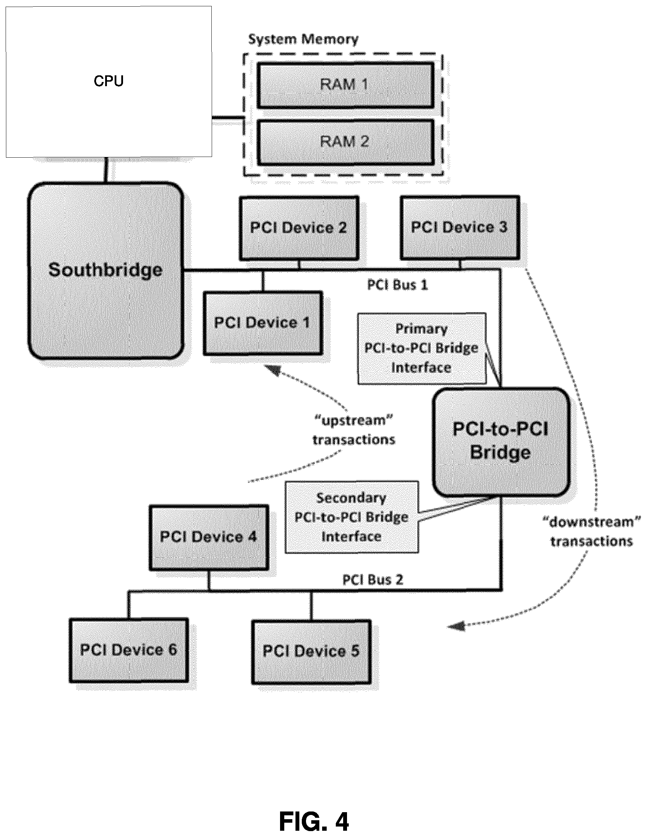

FIG. 4 depicts an example operation. For example, PCIe Device 4 may represent the active NID and PCIe Device 5 may represent the failover NID. In terms of the PCIe hierarchy, including base address register (BAR) configuration, PCIe Device 5 not exist. However, based on failover to failover NID, the PCIe physical fabric can replace PCIe Device 4 with PCIe Device 5 to provide a host platform with access to PCIe Device 5. For example, on failover, VF and PF information of PCIe Device 4 can be utilized by PCIe Device 5.

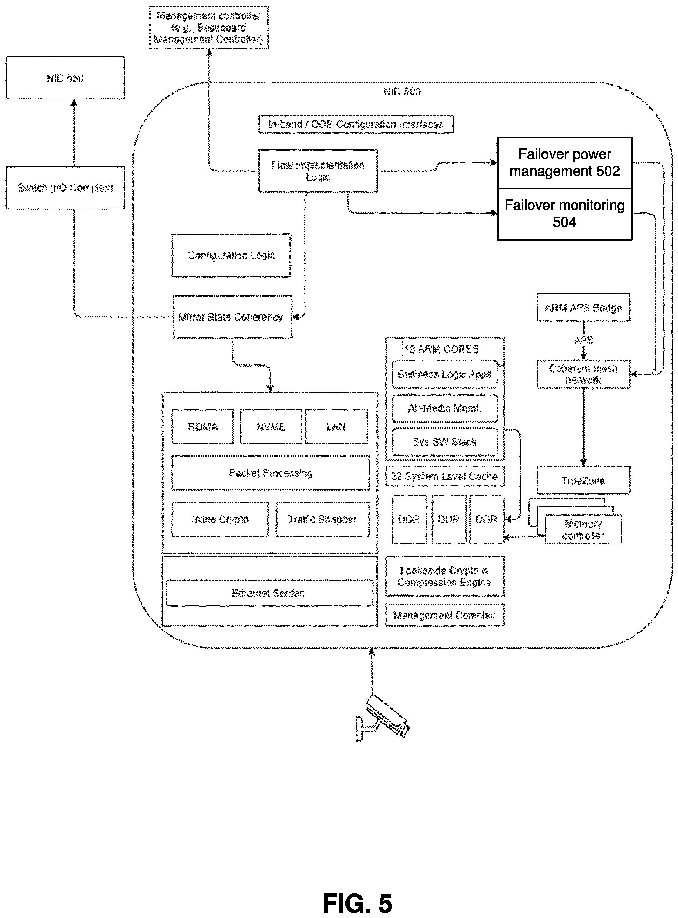

FIG. 5 depicts an example system. NID 500 and NID 550 can include circuitry and software described at least with respect to FIGs. 7A, 7B, 8, and/or 9. NID 500 can include circuitry (e.g., application specific integrated circuits (ASICs)) to perform operations (e.g., media processing, cryptographic operations, compression/decompression, and so forth), network interface circuitry, compute resources, memory, and internal fabric. For example, network interface circuitry may access queues that store data or control packets and accelerators may store keys to be used for cryptographic operations.

Failover power management circuitry 502 can put circuitry of NID 500 in sleep or deep power state or exit sleep or deep power state to operating state. Failover monitoring circuitry 504 can copy or update process state status from active NID 550 as well as detect failure state of active NID 550.

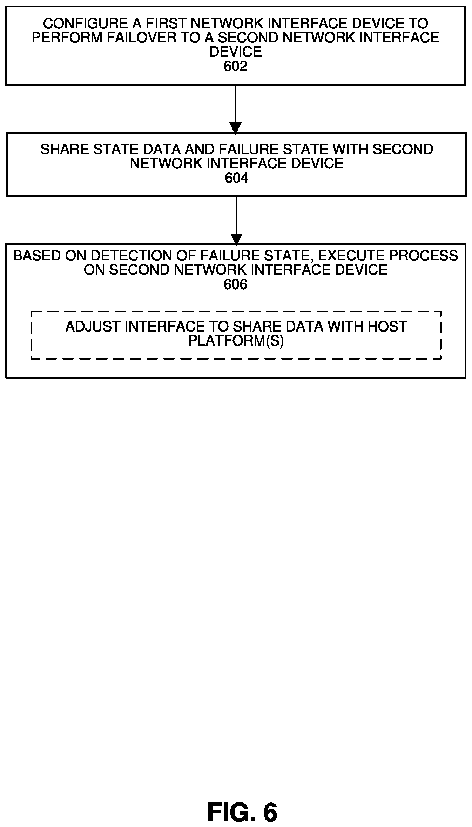

FIG. 6 depicts an example process. The process can be performed by a set of network interface devices that can execute one or more processes. At 602, a first network interface device and second network interface device can receive a configuration that specifies particular processes to failover from execution on the first network interface device to the second network interface device. For example, an operating system (OS), orchestrator, administrator, or other system software can provide the configuration. At 604, based on the configuration, the second network interface device can access process state data from the first network interface device and monitor for a failure condition of the first network interface device. In some examples, the failure condition can be indicative of malfunction, overutilization, or underutilization of circuitry in the first network interface device. In some examples, registers values can indicate the failure condition. In some examples, operating characteristics of the first network interface device, such as temperature level, power consumption level (e.g., above a level or below second level), or other factors can indicate the failure condition. At 606, based on detection of the failure condition, the second network interface device can execute the particular processes to be failed over from execution by the first network interface device. For example, state information copied from the first network interface device can be used to continue execution of the particular processes, such as after a context switch, to restore and resume execution. In some examples, the second network interface device can restart execution of the particular processes. At 606, the second network interface device can adjust a connection interface to one or more host platforms so that data from the second network interface device is routed to the one or more host platforms.

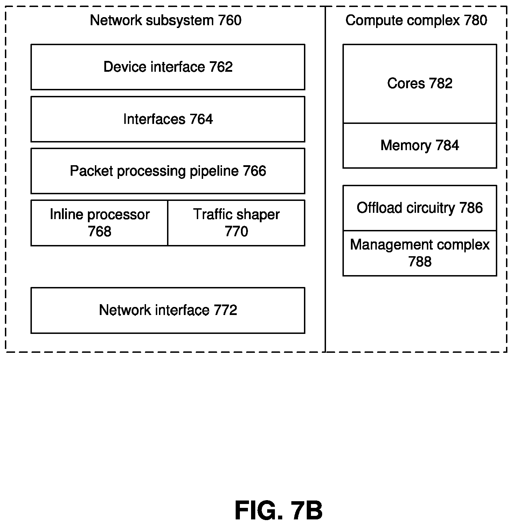

FIG. 7A depicts an example system. Host 700 can include processors, memory devices, device interfaces, as well as other circuitry such as described with respect to one or more of FIG. 7B, 8, and/or 9. Processors of host 700 can execute services (e.g., applications, microservices, virtual machine (VMs), microVMs, containers, processes, threads, or other virtualized execution environments), operating system (OS), and device drivers. An OS or device driver can configure network interface device or packet processing device 710 to utilize one or more control planes to communicate with software defined networking (SDN) controller 750 via a network to configure operation of the one or more control planes.

Packet processing device 710 can include multiple compute complexes, such as an Acceleration Compute Complex (ACC) 720 and Management Compute Complex (MCC) 730, as well as packet processing circuitry 740 and network interface technologies for communication with other devices via a network. ACC 720 can be implemented as one or more of: a microprocessor, processor, accelerator, field programmable gate array (FPGA), application specific integrated circuit (ASIC) or circuitry described at least with respect to FIG. 7B, 8, and/or 9. Similarly, MCC 730 can be implemented as one or more of: a microprocessor, processor, accelerator, field programmable gate array (FPGA), application specific integrated circuit (ASIC) or circuitry described at least with respect to FIG. 7B, 8, and/or 9. In some examples, ACC 720 and MCC 730 can be implemented as separate cores in a CPU, different cores in different CPUs, different processors in a same integrated circuit, different processors in different integrated circuit.

Packet processing device 710 can be implemented as one or more of: a microprocessor, processor, accelerator, field programmable gate array (FPGA), application specific integrated circuit (ASIC) or circuitry described at least with respect to FIG. 7B, 8, and/or 9. Packet processing pipeline circuitry 740 can process packets as directed or configured by one or more control planes executed by multiple compute complexes. In some examples, ACC 720 and MCC 730 can execute respective control planes 722 and 732.

As described herein, packet processing device 410, ACC 420, and/or MCC 430 can be configured to access state of a process executed on another network interface device, detect a failure state, and perform failover execution of the process based on detection of the failure state.

SDN controller 750 can upgrade or reconfigure software executing on ACC 720 (e.g., control plane 722 and/or control plane 732) through contents of packets received through packet processing device 710. In some examples, ACC 720 can execute control plane operating system (OS) (e.g., Linux) and/or a control plane application 722 (e.g., user space or kernel modules) used by SDN controller 750 to configure operation of packet processing pipeline 740. Control plane application 722 can incude Generic Flow Tables (GFT), ESXi, NSX, Kubernetes control plane software, application software for managing crypto configurations, Programming Protocol-independent Packet Processors (P4) runtime daemon, target specific daemon, Container Storage Interface (CSI) agents, or remote direct memory access (RDMA) configuration agents.

In some examples, SDN controller 750 can communicate with ACC 720 using a remote procedure call (RPC) such as Google remote procedure call (gRPC) or other service and ACC 720 can convert the request to target specific protocol buffer (protobuf) request to MCC 730. gRPC is a remote procedure call solution based on data packets sent between a client and a server. Although gRPC is an example, other communication schemes can be used such as, but not limited to, Java Remote Method Invocation, Modula-3, RPyC, Distributed Ruby, Erlang, Elixir, Action Message Format, Remote Function Call, Open Network Computing RPC, JSON-RPC, and so forth.

In some examples, SDN controller 750 can provide packet processing rules for performance by ACC 720. For example, ACC 720 can program table rules (e.g., header field match and corresponding action) applied by packet processing pipeline circuitry 740 based on change in policy and changes in VMs, containers, microservices, applications, or other processes. ACC 720 can be configured to provide network policy as flow cache rules into a table to configure operation of packet processing pipeline 740. For example, the ACC-executed control plane application 722 can configure rule tables applied by packet processing pipeline circuitry 740 with rules to define a traffic destination based on packet type and content. ACC 720 can program table rules (e.g., match-action) into memory accessible to packet processing pipeline circuitry 740 based on change in policy and changes in VMs.

A flow can be a sequence of packets being transferred between two endpoints, generally representing a single session using a protocol. Accordingly, a flow can be identified, using a match, by a set of defined tuples and, for routing purpose, a flow is identified by the two tuples that identify the endpoints, e.g., the source and destination addresses. For content-based services (e.g., load balancer, firewall, Intrusion detection system etc.), flows can be identified at a finer granularity by using N-tuples (e.g., source address, destination address, IP protocol, transport layer source port, and destination port). A packet in a flow is expected to have the same set of tuples in the packet header. A packet flow to be controlled can be identified by a combination of tuples (e.g., Ethernet type field, source and/or destination IP address, source and/or destination User Datagram Protocol (UDP) ports, source/destination TCP ports, or any other header field) and a unique source and destination queue pair (QP) number or identifier.

For example, ACC 720 can execute a virtual switch such as vSwitch or Open vSwitch (OVS), Stratum, or Vector Packet Processing (VPP) that provides communications between virtual machines executed by host 700 or with other devices connected to a network. For example, ACC 720 can configure packet processing pipeline circuitry 740 as to which VM is to receive traffic and what kind of traffic a VM can transmit. For example, packet processing pipeline circuitry 740 can execute a virtual switch such as vSwitch or Open vSwitch that provides communications between virtual machines executed by host 700 and packet processing device 710.

MCC 730 can execute a host management control plane, global resource manager, and perform hardware registers configuration. Control plane 732 executed by MCC 730 can perform provisioning and configuration of packet processing circuitry 740. For example, a VM executing on host 700 can utilize packet processing device 710 to receive or transmit packet traffic. MCC 730 can execute boot, power, management, and manageability software (SW) or firmware (FW) code to boot and initialize the packet processing device 710, manage the device power consumption, provide connectivity to Baseboard Management Controller (BMC), and other operations.

One or both control planes of ACC 720 and MCC 730 can define traffic routing table content and network topology applied by packet processing circuitry 740 to select a path of a packet in a network to a next hop or to a destination network-connected device. For example, a VM executing on host 700 can utilize packet processing device 710 to receive or transmit packet traffic.

ACC 720 can execute control plane drivers to communicate with MCC 730. At least to provide a configuration and provisioning interface between control planes 722 and 732, communication interface 725 can provide control-plane-to-control plane communications. Control plane 732 can perform a gatekeeper operation for configuration of shared resources. For example, via communication interface 725, ACC control plane 722 can communicate with control plane 732 to perform one or more of: determine hardware capabilities, access the data plane configuration, reserve hardware resources and configuration, communications between ACC and MCC through interrupts or polling, subscription to receive hardware events, perform indirect hardware registers read write for debuggability, flash and physical layer interface (PHY) configuration, or perform system provisioning for different deployments of network interface device such as: storage node, tenant hosting node, microservices backend, compute node, or others.

Communication interface 725 can be utilized by a negotiation protocol and configuration protocol running between ACC control plane 722 and MCC control plane 732. Communication interface 725 can include a general purpose mailbox for different operations performed by packet processing circuitry 740. Examples of operations of packet processing circuitry 740 include issuance of non-volatile memory express (NVMe) reads or writes, issuance of Non-volatile Memory Express over Fabrics (NVMe-oF^{™}) reads or writes, lookaside crypto Engine (LCE) (e.g., compression or decompression), Address Translation Engine (ATE) (e.g., input output memory management unit (IOMMU) to provide virtual-to-physical address translation), encryption or decryption, configuration as a storage node, configuration as a tenant hosting node, configuration as a compute node, provide multiple different types of services between different Peripheral Component Interconnect Express (PCIe) end points, or others.

Communication interface 725 can include one or more mailboxes accessible as registers or memory addresses. For communications from control plane 722 to control plane 732, communications can be written to the one or more mailboxes by control plane drivers 724. For communications from control plane 732 to control plane 722, communications can be written to the one or more mailboxes. Communications written to mailboxes can include descriptors which include message opcode, message error, message parameters, and other information. Communications written to mailboxes can include defined format messages that convey data.

Communication interface 725 can provide communications based on writes or reads to particular memory addresses (e.g., dynamic random access memory (DRAM)), registers, other mailbox that is written-to and read-from to pass commands and data. To provide for secure communications between control planes 722 and 732, registers and memory addresses (and memory address translations) for communications can be available only to be written to or read from by control planes 722 and 732 or cloud service provider (CSP) software executing on ACC 720 and device vendor software, embedded software, or firmware executing on MCC 730. Communication interface 725 can support communications between multiple different compute complexes such as from host 700 to MCC 730, host 700 to ACC 720, MCC 730 to ACC 720, baseboard management controller (BMC) to MCC 730, BMC to ACC 720, or BMC to host 700.

Packet processing circuitry 740 can be implemented using one or more of: application specific integrated circuit (ASIC), field programmable gate array (FPGA), processors executing software, or other circuitry. Control plane 722 and/or 732 can configure packet processing pipeline circuitry 740 or other processors to perform operations related to NVMe, NVMe-oF reads or writes, lookaside crypto Engine (LCE), Address Translation Engine (ATE), local area network (LAN), compression/decompression, encryption/decryption, or other accelerated operations.

Various message formats can be used to configure ACC 720 or MCC 730. In some examples, a P4 program can be compiled and provided to MCC 730 to configure packet processing circuitry 740. The following is a JSON configuration file that can be transmitted from ACC 720 to MCC 730 to get capabilities of packet processing circuitry 740 and/or other circuitry in packet processing device 710. More particularly, the file can be used to specify a number of transmit queues, number of receive queues, number of supported traffic classes (TC), number of available interrupt vectors, number of available virtual ports and the types of the ports, size of allocated memory, supported parser profiles, exact match table profiles, packet mirroring profiles, among others.

FIG. 7B depicts an example network interface device system. Various examples of a packet processing device or network interface device 701 can utilize components of the system of FIG. 7B. In some examples, a packet processing device or a network interface device can refer to one or more of: a network interface controller (NIC), a remote direct memory access (RDMA)-enabled NIC, SmartNIC, router, switch, forwarding element, infrastructure processing unit (IPU), data processing unit (DPU), or edge processing unit (EPU). An edge processing unit (EPU) can include a network interface device that utilizes processors and accelerators (e.g., digital signal processors (DSPs), signal processors, or wireless specific accelerators for Virtualized radio access networks (vRANs), cryptographic operations, compression/decompression, and so forth). Network subsystem 760 can be communicatively coupled to compute complex 780. Device interface 762 can provide an interface to communicate with a host. Various examples of device interface 762 can utilize protocols based on Peripheral Component Interconnect Express (PCIe), Compute Express Link (CXL), or others as well as virtual device interface such as virtual device interfaces.

Interfaces 764 can initiate and terminate at least offloaded remote direct memory access (RDMA) operations, Non-volatile memory express (NVMe) reads or writes operations, and LAN operations. Packet processing pipeline 766 can perform packet processing (e.g., packet header and/or packet payload) based on a configuration and support quality of service (QoS) and telemetry reporting. Inline processor 768 can perform offloaded encryption or decryption of packet communications (e.g., Internet Protocol Security (IPSec) or others). Traffic shaper 770 can schedule transmission of communications. Network interface 772 can provide an interface at least to an Ethernet network by media access control (MAC) and serializer/de-serializer (Serdes) operations.

Cores 782 can be configured to perform infrastructure operations such as storage initiator, Transport Layer Security (TLS) proxy, virtual switch (e.g., vSwitch), or other operations. Memory 784 can store applications and data to be performed or processed. Offload circuitry 786 can perform at least cryptographic and compression operations for host or use by compute complex 780. Offload circuitry 786 can include one or more graphics processing units (GPUs) that can access memory 784. Management complex 788 can perform secure boot, life cycle management and management of network subsystem 760 and/or compute complex 780.

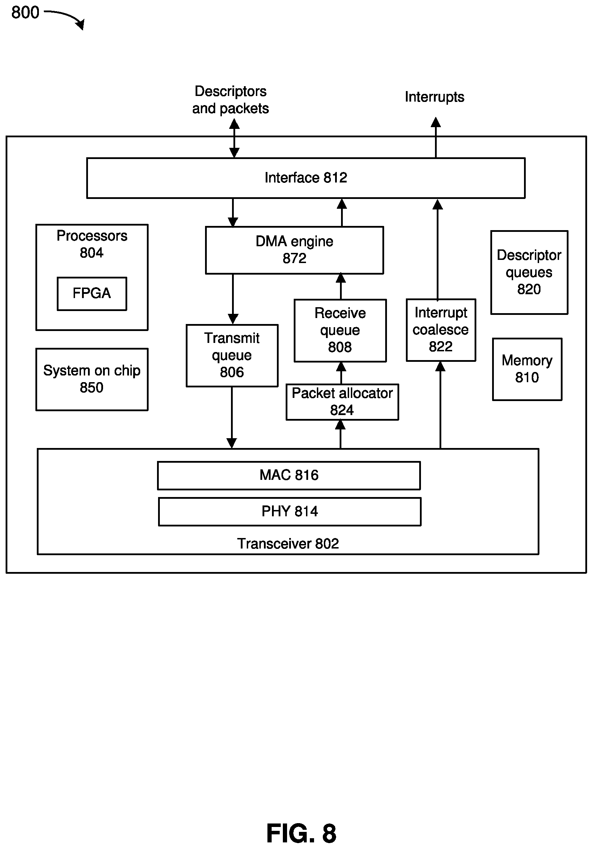

FIG. 8 depicts an example network interface device or packet processing device. In some examples, circuitry of network interface device can be utilized to access state of a process executed on another network interface device, detect a failure state, and perform failover execution of the process based on detection of the failure state, as described herein. In some examples, packet processing device 800 can be implemented as a network interface controller, network interface card, a host fabric interface (HFI), or host bus adapter (HBA), and such examples can be interchangeable. Packet processing device 800 can be coupled to one or more servers using a bus, PCIe, CXL, or Double Data Rate (DDR). Packet processing device 800 may be embodied as part of a system-on-a-chip (SoC) that includes one or more processors, or included on a multichip package that also contains one or more processors. An SoC can further include one or more of: components of a network interface device, an accelerator, ASIC, FPGA, GPU, GPGPU, memory, interfaces, or other circuitry described herein.

Some examples of packet processing device 800 are part of an Infrastructure Processing Unit (IPU) or data processing unit (DPU) or utilized by an IPU or DPU. An xPU can refer at least to an IPU, DPU, GPU, GPGPU, or other processing units (e.g., accelerator devices). An IPU or DPU can include a network interface with one or more programmable or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Network interface 800 can include transceiver 802, processors 804, transmit queue 806, receive queue 808, memory 810, and host interface 812, and DMA engine 852. Transceiver 802 can be capable of receiving and transmitting packets in conformance with the applicable protocols such as Ethernet as described in IEEE 802.3, although other protocols may be used. Transceiver 802 can receive and transmit packets from and to a network via a network medium (not depicted). Transceiver 802 can include PHY circuitry 814 and media access control (MAC) circuitry 816. PHY circuitry 814 can include encoding and decoding circuitry (not shown) to encode and decode data packets according to applicable physical layer specifications or standards. MAC circuitry 816 can be configured to assemble data to be transmitted into packets, that include destination and source addresses along with network control information and error detection hash values.

Processors 804 can be any a combination of a: processor, core, graphics processing unit (GPU), field programmable gate array (FPGA), application specific integrated circuit (ASIC), or other programmable hardware device that allow programming of network interface 800. For example, a "smart network interface" can provide packet processing capabilities in the network interface using processors 804.

Processors 804 can include one or more packet processing pipeline that can be configured to perform match-action on received packets to identify packet processing rules and next hops using information stored in a ternary content-addressable memory (TCAM) tables or exact match tables in some embodiments. For example, match-action tables or circuitry can be used whereby a hash of a portion of a packet is used as an index to find an entry. Packet processing pipelines can perform one or more of: packet parsing (parser), exact match-action (e.g., small exact match (SEM) engine or a large exact match (LEM)), wildcard match-action (WCM), longest prefix match block (LPM), a hash block (e.g., receive side scaling (RSS)), a packet modifier (modifier), or traffic manager (e.g., transmit rate metering or shaping). For example, packet processing pipelines can implement access control list (ACL) or packet drops due to queue overflow.

Configuration of operation of processors 804, including its data plane, can be programmed based on one or more of: Protocol-independent Packet Processors (P4), Software for Open Networking in the Cloud (SONiC), Broadcom^{®} Network Programming Language (NPL), NVIDIA^{®} CUDA^{®}, NVIDIA^{®} DOCA^{™}, Infrastructure Programmer Development Kit (IPDK), among others.

Packet allocator 824 can provide distribution of received packets for processing by multiple CPUs or cores using timeslot allocation described herein or RSS. When packet allocator 824 uses RSS, packet allocator 824 can calculate a hash or make another determination based on contents of a received packet to determine which CPU or core is to process a packet.

Interrupt coalesce 822 can perform interrupt moderation whereby network interface interrupt coalesce 822 waits for multiple packets to arrive, or for a time-out to expire, before generating an interrupt to host system to process received packet(s). Receive Segment Coalescing (RSC) can be performed by network interface 800 whereby portions of incoming packets are combined into segments of a packet. Network interface 800 provides this coalesced packet to an application.

Direct memory access (DMA) engine 852 can copy a packet header, packet payload, and/or descriptor directly from host memory to the network interface or vice versa, instead of copying the packet to an intermediate buffer at the host and then using another copy operation from the intermediate buffer to the destination buffer.

Memory 810 can be any type of volatile or non-volatile memory device and can store any queue or instructions used to program network interface 800. Transmit queue 806 can include data or references to data for transmission by network interface. Receive queue 808 can include data or references to data that was received by network interface from a network. Descriptor queues 820 can include descriptors that reference data or packets in transmit queue 806 or receive queue 808. Host interface 812 can provide an interface with host device (not depicted). For example, host interface 812 can be compatible with PCI, PCI Express, PCI-x, Serial ATA, and/or USB compatible interface (although other interconnection standards may be used).

FIG. 9 depicts a system. In some examples, circuitry of network interface device can be configured to access state of a process executed on another network interface device, detect a failure state, and perform failover execution of the process based on detection of the failure state, as described herein. System 900 includes processor 910, which provides processing, operation management, and execution of instructions for system 900. Processor 910 can include any type of microprocessor, central processing unit (CPU), graphics processing unit (GPU), XPU, processing core, or other processing hardware to provide processing for system 900, or a combination of processors. An XPU can include one or more of: a CPU, a graphics processing unit (GPU), general purpose GPU (GPGPU), and/or other processing units (e.g., accelerators or programmable or fixed function FPGAs). Processor 910 controls the overall operation of system 900, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 900 includes interface 912 coupled to processor 910, which can represent a higher speed interface or a high throughput interface for system components that needs higher bandwidth connections, such as memory subsystem 920 or graphics interface components 940, or accelerators 942. Interface 912 represents an interface circuit, which can be a standalone component or integrated onto a processor die. Where present, graphics interface 940 interfaces to graphics components for providing a visual display to a user of system 900. In one example, graphics interface 940 can drive a display that provides an output to a user. In one example, the display can include a touchscreen display. In one example, graphics interface 940 generates a display based on data stored in memory 930 or based on operations executed by processor 910 or both. In one example, graphics interface 940 generates a display based on data stored in memory 930 or based on operations executed by processor 910 or both.

Accelerators 942 can be a programmable or fixed function offload engine that can be accessed or used by a processor 910. For example, an accelerator among accelerators 942 can provide data compression (DC) capability, cryptography services such as public key encryption (PKE), cipher, hash/authentication capabilities, decryption, or other capabilities or services. In some cases, accelerators 942 can be integrated into a CPU socket (e.g., a connector to a motherboard or circuit board that includes a CPU and provides an electrical interface with the CPU). For example, accelerators 942 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 942 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 920 represents the main memory of system 900 and provides storage for code to be executed by processor 910, or data values to be used in executing a routine. Memory subsystem 920 can include one or more memory devices 930 such as read-only memory (ROM), flash memory, one or more varieties of random access memory (RAM) such as DRAM, or other memory devices, or a combination of such devices. Memory 930 stores and hosts, among other things, operating system (OS) 932 to provide a software platform for execution of instructions in system 900. Additionally, applications 934 can execute on the software platform of OS 932 from memory 930. Applications 934 represent programs that have their own operational logic to perform execution of one or more functions. Processes 936 represent agents or routines that provide auxiliary functions to OS 932 or one or more applications 934 or a combination. OS 932, applications 934, and processes 936 provide software logic to provide functions for system 900. In one example, memory subsystem 920 includes memory controller 922, which is a memory controller to generate and issue commands to memory 930. It will be understood that memory controller 922 could be a physical part of processor 910 or a physical part of interface 912. For example, memory controller 922 can be an integrated memory controller, integrated onto a circuit with processor 910.

Applications 934 and/or processes 936 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 932 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, AMD^{®}, Qualcomm^{®}, IBM^{®}, Nvidia^{®}, Broadcom^{®}, Texas Instruments^{®}, among others.

While not specifically illustrated, it will be understood that system 900 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 900 includes interface 914, which can be coupled to interface 912. In one example, interface 914 represents an interface circuit, which can include standalone components and integrated circuitry. In one example, multiple user interface components or peripheral components, or both, couple to interface 914. Network interface 950 provides system 900 the ability to communicate with remote devices (e.g., servers or other computing devices) over one or more networks. Network interface 950 can include an Ethernet adapter, wireless interconnection components, cellular network interconnection components, USB (universal serial bus), or other wired or wireless standards-based or proprietary interfaces. Network interface 950 can transmit data to a device that is in the same data center or rack or a remote device, which can include sending data stored in memory. Network interface 950 can receive data from a remote device, which can include storing received data into memory. In some examples, packet processing device or network interface device 950 can refer to one or more of: a network interface controller (NIC), a remote direct memory access (RDMA)-enabled NIC, SmartNIC, router, switch, forwarding element, infrastructure processing unit (IPU), or data processing unit (DPU). An example IPU or DPU is described with respect to FIG. 7A, 7B, and/or 8.

In some examples, network interface 950 can be configured to access state of a process executed on another network interface device, detect a failure state, and perform failover execution of the process based on detection of the failure state, as described herein.

In one example, system 900 includes one or more input/output (I/O) interface(s) 960. I/O interface 960 can include one or more interface components through which a user interacts with system 900. Peripheral interface 970 can include any hardware interface not specifically mentioned above. Peripherals refer generally to devices that connect dependently to system 900.

In one example, system 900 includes storage subsystem 980 to store data in a nonvolatile manner. In one example, in certain system implementations, at least certain components of storage 980 can overlap with components of memory subsystem 920. Storage subsystem 980 includes storage device(s) 984, which can be or include any conventional medium for storing large amounts of data in a nonvolatile manner, such as one or more magnetic, solid state, or optical based disks, or a combination. Storage 984 holds code or instructions and data 986 in a persistent state (e.g., the value is retained despite interruption of power to system 900). Storage 984 can be generically considered to be a "memory," although memory 930 is typically the executing or operating memory to provide instructions to processor 910. Whereas storage 984 is nonvolatile, memory 930 can include volatile memory (e.g., the value or state of the data is indeterminate if power is interrupted to system 900). In one example, storage subsystem 980 includes controller 982 to interface with storage 984. In one example controller 982 is a physical part of interface 914 or processor 910 or can include circuits or logic in both processor 910 and interface 914.

A volatile memory is memory whose state (and therefore the data stored in it) is indeterminate if power is interrupted to the device. A non-volatile memory (NVM) device is a memory whose state is determinate even if power is interrupted to the device.

In an example, system 900 can be implemented using interconnected compute sleds of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications.

In an example, system 900 can be implemented using interconnected compute sleds of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.

Example 1 includes one or more examples and includes an apparatus that includes: a first programmable network interface device comprising a network interface, a direct memory access (DMA) circuitry, a host interface, and at least one processor to execute a first process and a second programmable network interface device comprising a network interface, a DMA circuitry, a host interface, and at least one processor, wherein the at least one processor of the second programmable network interface device is to perform failover execution of the first process.

Example 2 includes one or more examples and includes a connection between the first programmable network interface device and the second programmable network interface device, wherein the first programmable network interface device is to provide state of the first process for failover execution of the first process on the at least one processor of the programmable second network interface device.

Example 3 includes one or more examples, wherein the connection comprises a switch and/or the host interface of the first programmable network interface device and the host interface of the second programmable network interface device.

Example 4 includes one or more examples, wherein the at least one processor of the second programmable network interface device is to perform failover execution of the first process based on degradation of performance of the first process as executed by the at least one processor of the first programmable network interface device.

Example 5 includes one or more examples, wherein the at least one processor of the second programmable network interface device is to copy state of the first process as executed by the at least one processor of the first programmable network interface device and the at least one processor of the second programmable network interface device is to perform failover execution of the first process based on the copied state.

Example 6 includes one or more examples, wherein the copied state comprises one or more of: contents of registers, program counter content, operating system (OS) specific data, condition registers, or packet header and/or data.

Example 7 includes one or more examples, wherein the at least one processor of the first programmable network interface device to execute the first process comprises one or more of: a central processing unit (CPU), a graphics processing unit (GPU), or an accelerator and the at least one processor of the second programmable network interface device to perform failover execution of the first process based on the copied state comprises one or more of: a CPU, a GPU, or an accelerator.

Example 8 includes one or more examples, wherein the at least one processor of the second programmable network interface device is to cause the host interface of the second programmable network interface device to output data, generated by the first process executed by the at least one processor of the second programmable network interface device, to a host platform.

Example 9 includes one or more examples, and includes at least one non-transitory computer-readable medium comprising instructions stored thereon, that if executed by one or more processors, cause the one or more processors to: configure a first programmable network interface device to execute a first process and perform failover execution of the first process on a second programmable network interface device, wherein: the first programmable network interface device comprises a network interface, a direct memory access (DMA) circuitry, a host interface, and at least one processor and the second programmable network interface device comprises a network interface, a DMA circuitry, a host interface, and at least one processor to perform failover execution of the first process.

Example 10 includes one or more examples, and includes instructions stored thereon, that if executed by one or more processors, cause the one or more processors to: configure the at least one processor of the second programmable network interface device to perform failover execution of the first process based on degradation of performance of the first process as executed by the first programmable network interface device.

Example 11 includes one or more examples, and includes instructions stored thereon, that if executed by one or more processors, cause the one or more processors to: configure the at least one processor of the second programmable network interface device to copy state of the first process as executed by the at least one processor of the first programmable network interface device and configure the at least one processor of the second programmable network interface device to perform failover execution of a first process based on the copied state.

Example 12 includes one or more examples, wherein the copied state comprises one or more of: contents of registers, program counter content, operating system (OS) specific data, condition registers, or packet header and/or data.

Example 13 includes one or more examples, and includes instructions stored thereon, that if executed by one or more processors, cause the one or more processors to: configure the at least one processor of the second programmable network interface device to cause the host interface of the second programmable network interface device to output data, generated by the first process executed by the at least one processor of the second programmable network interface device, to a host server platform.

Example 14 includes one or more examples, wherein to perform failover execution of a first process, the at least one processor of the second programmable network interface device is to restart execution of the first process.

Example 15 includes one or more examples, and includes a method that includes: configuring a first programmable network interface device to execute a first process and perform failover execution of the first process on a second programmable network interface device, wherein: the first programmable network interface device comprises a network interface, a direct memory access (DMA) circuitry, a host interface, and at least one processor and the second programmable network interface device comprises a network interface, a DMA circuitry, a host interface, and at least one processor to perform failover execution of the first process.

Example 16 includes one or more examples, and includes configuring the at least one processor of the second programmable network interface device to perform failover execution of a first process based on degradation of performance of the first process as executed by the first programmable network interface device.

Example 17 includes one or more examples, and includes configuring the at least one processor of the second programmable network interface device to copy state of the first process as executed by the at least one processor of the first programmable network interface device and configuring the at least one processor of the second programmable network interface device to perform failover execution of the first process based on the copied state.

Example 18 includes one or more examples, wherein the copied state comprises one or more of: contents of registers, program counter content, operating system (OS) specific data, condition registers, or packet header and/or data.

Example 19 includes one or more examples, configuring the at least one processor of the second programmable network interface device to cause the host interface of the second programmable network interface device to output data generated by the first process, executed by the at least one processor of the second programmable network interface device, to a host system.

Example 20 includes one or more examples, wherein to perform failover execution of a first process, the at least one processor of the second programmable network interface device is to restart execution of the first process.

## Claims

1. An apparatus comprising:
a first programmable network interface device comprising a network interface, a direct memory access (DMA) circuitry, a host interface, and at least one processor to execute a first process and
a second programmable network interface device comprising a network interface, a DMA circuitry, a host interface, and at least one processor, wherein the at least one processor of the second programmable network interface device is to perform failover execution of the first process.

2. The apparatus of claim 1, comprising a connection between the first programmable network interface device and the second programmable network interface device, wherein the first programmable network interface device is to provide state of the first process for failover execution of the first process on the at least one processor of the programmable second network interface device.

3. The apparatus of claim 2, wherein the connection comprises a switch and/or the host interface of the first programmable network interface device and the host interface of the second programmable network interface device.

4. The apparatus of any of claims 1-3, wherein the at least one processor of the second programmable network interface device is to perform failover execution of the first process based on degradation of performance of the first process as executed by the at least one processor of the first programmable network interface device.

5. The apparatus of one of the previous claims, wherein
the at least one processor of the second programmable network interface device is to copy state of the first process as executed by the at least one processor of the first programmable network interface device and
the at least one processor of the second programmable network interface device is to perform failover execution of the first process based on the copied state.

6. The apparatus of claim 5, wherein the copied state comprises one or more of: contents of registers, program counter content, operating system (OS) specific data, condition registers, or packet header and/or data.

7. The apparatus of claim 5 or 6, wherein
the at least one processor of the first programmable network interface device to execute the first process comprises one or more of: a central processing unit (CPU), a graphics processing unit (GPU), or an accelerator and
the at least one processor of the second programmable network interface device to perform failover execution of the first process based on the copied state comprises one or more of: a CPU, a GPU, or an accelerator.

8. The apparatus of one of the previous claims, wherein the at least one processor of the second programmable network interface device is to cause the host interface of the second programmable network interface device to output data, generated by the first process executed by the at least one processor of the second programmable network interface device, to a host platform.

9. A method comprising:
configuring a first programmable network interface device to execute a first process and perform failover execution of the first process on a second programmable network interface device, wherein:
the first programmable network interface device comprises a network interface, a direct memory access (DMA) circuitry, a host interface, and at least one processor and
the second programmable network interface device comprises a network interface, a DMA circuitry, a host interface, and at least one processor to perform failover execution of the first process.

10. The method of claim 9, comprising:
configuring the at least one processor of the second programmable network interface device to perform failover execution of a first process based on degradation of performance of the first process as executed by the first programmable network interface device.

11. The method of claim 9 or 10, comprising:
configuring the at least one processor of the second programmable network interface device to copy state of the first process as executed by the at least one processor of the first programmable network interface device and
configuring the at least one processor of the second programmable network interface device to perform failover execution of the first process based on the copied state.

12. The method of claim 9, 10 or 11, comprising:
configuring the at least one processor of the second programmable network interface device to cause the host interface of the second programmable network interface device to output data generated by the first process, executed by the at least one processor of the second programmable network interface device, to a host system.

13. The method of claim 9, 10, 11 or 12, wherein to perform failover execution of a first process, the at least one processor of the second programmable network interface device is to restart execution of the first process.

14. The method of any of claims 9-13, wherein the copied state comprises one or more of:
contents of registers, program counter content, operating system (OS) specific data, condition registers, or packet header and/or data.

15. A computer-readable medium comprising instructions that if executed, by one or more processors, implement a method or realise an apparatus as claimed in any preceding claim.
